# EUROPEAN PATENT APPLICATION

(11) **EP 4 840 549 A2**
(43) Date of publication of application: **18.11.2026**
(21) Application number: 26173924.7
(22) Date of filing: 22.04.2026
(51) Int. Cl.: B04B 1/08, B04B 1/18, B04B 5/00, B04B 7/14, B04B 11/04

(54) **VERTICAL CENTRIFUGE, AND METHOD FOR SEPARATING WATER-SOLUBLE SUBSTANCE AND COMPONENT USING VERTICAL CENTRIFUGE**

(30) Priority: 22.04.2025 JP 2025070586
(71) Applicant: Mitsubishi Kakoki Kaisha, Ltd, Kawasaki-shi, Kanagawa 210-8560 (JP)
(72) Inventor: ARAI, Tsuyoshi, Kawasaki-shi, Kanagawa 210-8560 (JP); OTANI, Yoichiro, Kawasaki-shi, Kanagawa 210-8560 (JP)
(74) Representative: Daub, Thomas

(57) **Abstract**

A vertical centrifuge includes: ribs provided on a lower portion of a guide cylinder and extending radially to an outer peripheral portion of an inner surface of a skirt portion expanding in a conical shape, in which each of the ribs pushes sealing water present around the skirt portion by a pushing force applied and enhanced by a centrifugal force when the stock solution is positioned in a direction toward a circumferential end of a lower portion of the skirt portion, the stock solution pushes sealing water present around the skirt portion by the pushing force enhanced by the rib, a restoring force toward a push-back direction is generated in the pushed sealing water by the centrifugal force, and the pushing force and the restoring force collide with each other to form a turbulent flow on a boundary surface between the stock solution and the sealing water.

## Description

### BACKGROUND

### 1. Field of the Invention

The present disclosure relates to a vertical centrifuge and a method for separating a water-soluble substance and component using a vertical centrifuge, and more particularly, to a vertical centrifuge and a method for separating a water-soluble substance and component using a vertical centrifuge capable of transferring the water-soluble substance and component in a stock solution to a separated water side (heavy liquid side) or a sludge side by an action of a rib for increasing a pushing force formed on an inner surface of a guide cylinder.

### 2. Description of the Related Art

In aircrafts, ships, automobiles, and the like, carbon-neutral fuel has attracted attention in consideration of global warming.

The carbon neutral fuel is a fuel in a state where an emission amount and an absorption amount of greenhouse gas (GHG) such as carbon dioxide, methane, dinitrogen monoxide, and fluorocarbon gas are balanced, and is a fuel in which the emission amount of the greenhouse gas is subtracted to zero by being absorbed or removed anywhere by the amount of the discharged greenhouse gas.

In recent carbon-neutral fuels, marine structures, and land facilities, it has been pointed out that a stock solution containing a water-soluble substance and component such as ammonia, sodium (Na), or potassium (K) may affect later-stage equipment of an oil purifier, and it is desired to remove the stock solution by the oil purifier.

When ammonia fuel is used as the carbon-neutral fuel in an engine such as an engine, ammonia may be mixed into lubricating oil used in the engine. When the lubricating oil is reused, ammonia that has entered the lubricating oil may adversely affect the equipment.

In a ship equipped with a gas turbine, light oil may be used as a fuel of the gas turbine. Since light oil cannot be generated in the ship, the light oil is marine-transported and brought into the ship.

In the process of marine transportation, alkali metals such as sodium or potassium may be mixed into light oil, and the alkali metals such as sodium or potassium mixed into light oil may generate corrosive substances in gas turbine equipment, and thus the alkali metals need to be removed from light oil.

In a centrifuge disclosed in JPS61-35861A, a distributor is provided with a rib for guiding the flow of a product (stock solution) from an opening to an ascending passage. The flow of the product supplied through the opening is guided to the ascending passage through the rib. The rib ensures the flow from the opening to the ascending passage.

According to the centrifuge disclosed in JPS61-35861A, the rib provided on an inner surface of the distributor is a rib extending to the opening for allowing the stock solution to flow to the ascending passage provided in a plate, the stock solution is guided to the rib in the ascending passage, and the separation of the liquid phase of the stock solution and the centrifugation of the solid matter can be performed by one centrifugal drum.

However, it has been found a problem that, in the guide cylinder, ammonia, which is a water-soluble substance and component in the stock solution, is not completely transferred to the separated water (sealing water) side, which is a heavy liquid, the heavy liquid (water) can be separated from the stock solution, but the ammonia is not separated, and the ammonia is contained in a light liquid.

In addition, it has been found that there is a similar problem in the case of alkali metals such as sodium (Na) or potassium (K), which are water-soluble substance and components in the stock solution.

As an oil purifier, a centrifuge is used for the purpose of removing solid matter and moisture in the stock solution, but there is a problem that it is difficult to remove a water-soluble substance and component contained in the stock solution because the water-soluble substance and component is derived from the production process and transport of the stock solution.

### SUMMARY

An object of the present disclosure is to provide a vertical centrifuge using a rib of a guide cylinder and a method for separating a water-soluble substance and component in a stock solution that can remove the water-soluble substance and component in the stock solution from clean oil (light liquid side) and transfer the water-soluble substance and component to a sealing water side using the vertical centrifuge.

Other objects of the present disclosure will become apparent from the following description.

The above problems are solved by the following inventions.

According to a first aspect of the present disclosure, there is provided a vertical centrifuge for introducing a stock solution, which is a liquid to be treated, into a processing chamber provided with a plurality of separation plates on an outer periphery of a guide cylinder to obtain a clean liquid on a light liquid side, the vertical centrifuge including: a plurality of ribs provided on a lower portion of the guide cylinder and extending radially to an outer peripheral portion of an inner surface of a skirt portion expanding in a conical shape, in which each of the ribs pushes sealing water present around the skirt portion by a pushing force applied and enhanced by a centrifugal force when the stock solution is positioned in a direction toward a circumferential end of a lower portion of the skirt portion, the stock solution pushes sealing water present around the skirt portion by the pushing force enhanced by the rib, a restoring force toward a push-back direction is generated in the pushed sealing water by the centrifugal force, and the pushing force of the stock solution and the restoring force generated in the sealing water collide with each other to form a turbulent flow on a boundary surface between the stock solution and the sealing water.

According to a second aspect of the present disclosure, in the vertical centrifuge according to the first aspect, each of the ribs may be detachably provided on an inner surface of the skirt portion.

According to a third aspect of the present disclosure, in the vertical centrifuge according to the first aspect, a water-soluble substance and component may be extracted from the liquid to be treated and transferred to a sealing water side due to the formation of the turbulent flow.

According to a fourth aspect of the present disclosure, in the vertical centrifuge according to the third aspect, the water-soluble substance and component may contain ammonia.

According to a fifth aspect of the present disclosure, in the vertical centrifuge according to the third aspect, the water-soluble substance and component may contain alkali metals.

According to a sixth aspect of the present disclosure, in the vertical centrifuge according to the first aspect, the rib may extend to the inside of the guide cylinder.

According to a seventh aspect of the present disclosure, in the vertical centrifuge according to the first aspect, a plurality of semicircular cutout portions may be formed at predetermined intervals on an outer periphery of the skirt portion.

According to an eighth aspect of the present disclosure, there is provided a method for separating a water-soluble substance and component using a vertical centrifuge configured to introduce a stock solution, which is a liquid to be treated including the water-soluble substance and component, into a processing chamber provided with a plurality of separation plates on an outer periphery of a guide cylinder and extract a light liquid in which the water-soluble substance and component are treated, the method including: providing, at a lower portion of the guide cylinder, a plurality of ribs extending radially on an inner surface of a skirt portion expanding in a conical shape; pushing, each of the ribs, sealing water present around the skirt portion by a pushing force enhanced by being added to a centrifugal force in a direction toward a circumferential end of a lower portion of the skirt portion; generating a restoring force toward a push-back direction in the pushed sealing water by the centrifugal force; forming a turbulent flow on a boundary surface between the stock solution and the sealing water when the pushing force of the stock solution and the restoring force generated in the sealing water collide with each other; and extracting the water-soluble substance and component from the liquid to be treated and transferring the water-soluble substance and component to a sealing water side due to the formation of the turbulent flow.

According to a ninth aspect of the present disclosure, in the method for separating a water-soluble substance and component using a vertical centrifuge according to the eighth aspect, the water-soluble substance and component may contain ammonia.

According to a tenth aspect of the present disclosure, in the method for separating a water-soluble substance and component using a vertical centrifuge according to the eighth aspect, the water-soluble substance and component may contain alkali metals.

According to the present disclosure, it is possible to provide a vertical centrifuge and a method for separating a water-soluble substance and component using a vertical centrifuge capable of transferring a water-soluble substance and component in a stock solution to a sealing water side even when a rib of a guide cylinder is used.

### BRIEF DESCRIPTION OF THE DRAWINGS

The present disclosure will become more fully understood from the detailed description given hereinbelow and the accompanying drawing which is given by way of illustration only, and thus is not limitative of the present disclosure and wherein:
FIG. 1 is a cross-sectional view showing a configuration of a main part of a centrifuge;
FIG. 2 is a bottom view showing a skirt portion of a guide cylinder provided in the centrifuge;
FIG. 3 is an essential part sectional view showing an example of how a rib is attached;
FIG. 4 is an essential part sectional view showing another example of how the rib is attached;
FIG. 5 is an essential part plan view showing a shape of the rib;
FIG. 6 is an essential part plan view showing another shape of the rib; and
FIG. 7 is a diagram illustrating an inner surface of the guide cylinder from below to sealing water.

### DETAILED DESCRIPTION OF THE INVENTION

Hereinafter, embodiments of the present disclosure will be described with reference to the drawings.

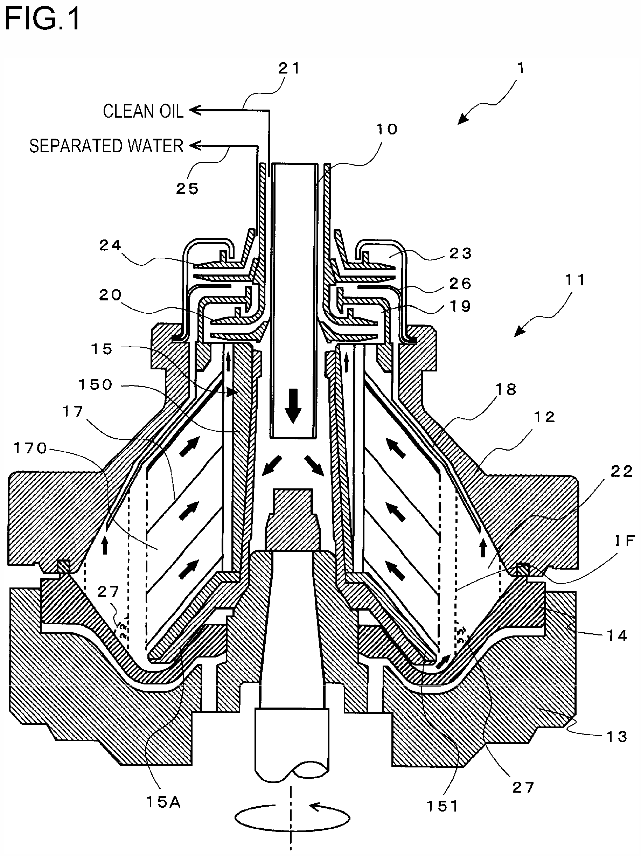

FIG. 1 is a cross-sectional view showing a configuration of a main part of a centrifuge.

A centrifuge 1 is a vertical centrifuge using a separation plate, and a stock solution, which is a liquid to be treated, supplied into the centrifuge 1 through a stock solution inlet pipe 10 is separated into two phases of a light liquid (clean liquid) and a heavy liquid (separated water) or into three phases of a light liquid (clean liquid), a heavy liquid (separated water), and a solid content.

In this aspect, when the oil to be treated (liquid to be treated) does not contain a large amount of water, it is only necessary to obtain a treated clean oil (clean liquid), and thus it is not intended to always discharge the separated water. In this case, it is only necessary to put sealing water.

In the present disclosure, examples of the stock solution (liquid to be treated) include oil to be treated such as fuel oil and lubricating oil, and preferably include oil to be treated containing ammonia (NH₃) as a water-soluble substance and component, and oil to be treated containing alkali metals such as sodium (Na) or potassium (K).

In the present disclosure, for the oil to be treated containing a water-soluble substance and component to be treated, the water-soluble substance and component is separated and removed from the oil to be treated by a vertical centrifuge including a separation plate, which is an oil purifier, so that clean oil as a clean liquid can be obtained.

It is considered that the alkali metals such as ammonia (NH₃), sodium (Na), and potassium (K) contained in the oil to be treated are all ionized in the oil to be treated and are mainly present as ammonium ions (NH₄⁺), sodium ions (Na⁺), and potassium ions (K⁺).

A rotating body 11 of the vertical centrifuge 1 is formed in a container shape by main components including a rotating body lid 12, a bottom portion 13, and a valve cylinder 14.

A guide cylinder 15 is provided on an outer periphery of a stock solution inlet pipe 10. The guide cylinder 15 includes a cylindrical portion 150 formed in an upper portion thereof and a skirt portion 151 expanded in a conical shape in a lower portion thereof.

A plurality of separation plates 17 are stacked on an outer periphery of the guide cylinder 15 in the rotating body 11 with a gap therebetween to form a processing chamber 170.

The stock solution passes between the valve cylinder 14 and the skirt portion 151 from the stock solution inlet pipe 10 via the cylindrical portion 150, and is sent to the processing chamber 170 provided with the separation plates 17, and is centrifugally separated into a clean liquid and water. The water-soluble substance and component to be treated in the oil to be treated is separated and removed to the water side.

In order to prevent the light liquid (clean oil) from flowing out from an outlet of the heavy liquid (separated water), a water sealing unit 22 is formed in which water is put in advance to close the outlet of the heavy liquid. When a water phase is formed in advance as the water sealing unit 22 inside the rotating body 11, the light liquid centrifugally separated later can be prevented from being discharged from the outlet of the heavy liquid, and the light liquid can be discharged from the outlet of the light liquid.

The stock solution is separated into a light liquid (clean oil) and a heavy liquid (separated water) by centrifugal separation in the processing chamber 170 provided with the separation plate 17.

The clean oil separated in the processing chamber 170 is guided by an upper surface of the skirt portion 151, moves to a central axis side of the separation plate 17, and is sent to the light liquid chamber 19 via an outer peripheral surface of the cylindrical portion 150.

The clean oil in the light liquid chamber 19 is discharged to the outside through a light liquid discharge pipe 21 by a light liquid impeller 20.

On the other hand, the separated water, which is the centrifugally separated heavy liquid, is sent to a water sealing unit 22 side. The separated water sent to the water sealing unit 22 is sent to a heavy liquid chamber 23 through a gap between a water intake plate 18 and a rotating body lid 12.

Water, which is a heavy liquid in the heavy liquid chamber 23, is recovered as separated water by the heavy liquid impeller 24 via a heavy liquid discharge pipe 25.

At this time, the water-soluble substance and component to be treated in the oil to be treated is separated to the water sealing unit 22 side together with the heavy liquid (separated water).

When the oil to be treated is centrifugally separated in the rotating body 11, the separated water is accumulated in the water sealing unit 22 as a heavy liquid, and the light liquid (clean oil) forms a vertical separation boundary surface IF with the heavy liquid (water).

In order to intermittently take out water from the heavy liquid side, a discharge valve (not shown) may be provided in the heavy liquid discharge pipe 25 connected to the heavy liquid impeller 24. The stock solution can be continuously supplied, and the water as the heavy liquid can be intermittently extracted.

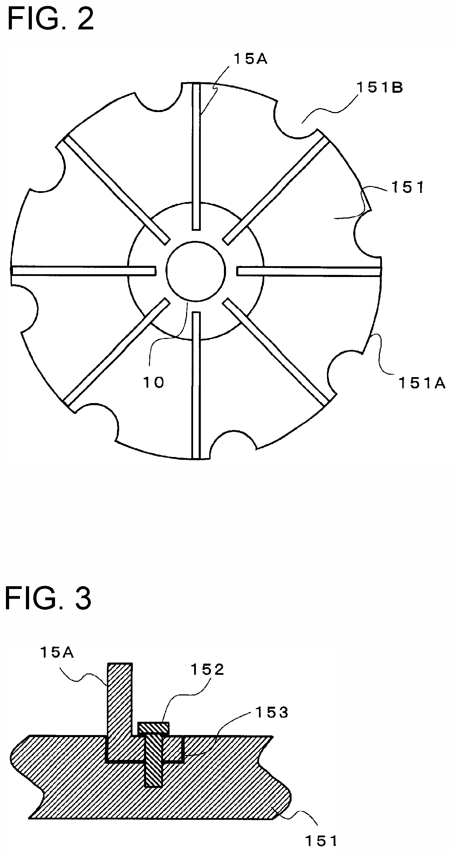

FIG. 2 is a bottom view showing the skirt portion 151 of the guide cylinder 15 provided in the centrifuge.

The guide cylinder 15 includes a cylindrical portion 150 formed in the upper portion thereof and the skirt portion 151 expanded in a conical shape in the lower portion thereof.

In the present embodiment, one or more, preferably a plurality of ribs 15A are provided to extend radially on the inner surface of the guide cylinder 15 extending from the cylindrical portion 150 to the skirt portion 151. The skirt portion 151 has no opening toward a circumferential end of the lower portion, and each of the ribs 15A extends to the circumferential end of the lower portion of the skirt portion 151.

The rib 15A can provide the stock solution with a pushing force enhanced by being added to the centrifugal force in a direction toward the circumferential end of the lower portion of the skirt portion 151. That is, since the rib 15A provides the stock solution with a pushing force enhanced by being added to the centrifugal force, the rib 15A is a rib for enhancing the pushing force that can efficiently supply the stock solution into the rotating body.

In the example of FIG. 2, in the guide cylinder 15, a plurality of semicircular cutout portions 151B corresponding to the ribs 15A are provided at predetermined intervals in an outer peripheral portion 151A of the skirt portion 151. Although FIG. 2 shows an example in which the cutout portions 151B are provided, the cutout portion 151B may not be provided.

Further, by applying a pushing force from the inside of a region of the skirt portion 151 toward the outside of a region by the ribs 15A, the sealing water of the water sealing unit 22 outside the region can be pushed in.

The ribs 15A preferably extend to the vicinity of an upper end of the cylindrical portion inside the guide cylinder 15. As shown in FIG. 2, the ribs 15A extend to the outer peripheral portion 151A of the skirt portion 151.

The number of ribs 15A is eight in the shown example, but is not particularly limited.

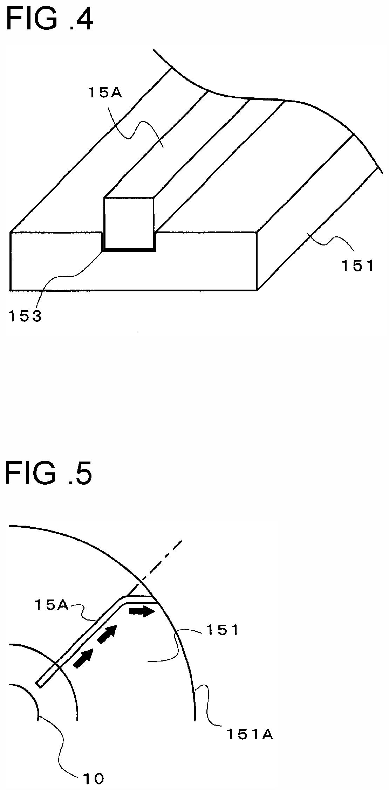

As shown in FIG. 3, each of the ribs 15A may be formed in an L-shaped angle shape, and a pin 152 may be detachably fixed along a groove 153 on the inner surface of the skirt portion 151, or as shown in FIG. 4, the rib 15A having a rectangular rod shape may be detachably provided along the groove 153.

The rib 15A may be formed integrally with the skirt portion 151 on the inner surface of the skirt portion 151, or may be fixed to the inner surface of the skirt portion 151 by welding.

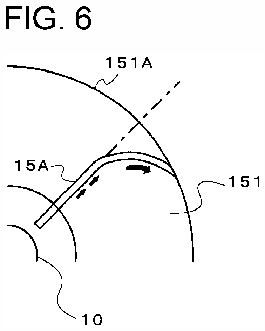

The rib 15A may be linear as shown in FIG. 2, may be partially bent as shown in FIG. 5, or may be curved as shown in FIG. 6.

The stock solution inlet pipe 10 is inserted into an axial center portion of the guide cylinder 15. The guide cylinder 15 rotates, but the stock solution inlet pipe 10 does not rotate.

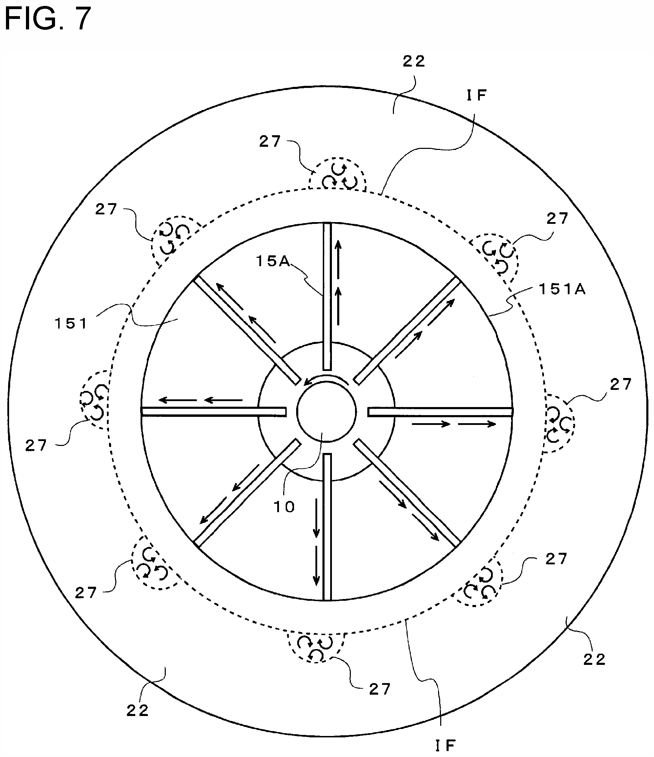

FIG. 7 is a diagram schematically illustrating a flow of the stock solution and the like around the lower surface of the skirt portion 151.

As described above, the stock solution, which is the oil to be treated, is introduced into a center of the guide cylinder 15 from the stock solution inlet pipe 10. In FIG. 7, an arrow drawn along a circumference of a cross section of the stock solution inlet pipe 10 exemplarily indicates a rotation direction of the guide cylinder 15, and an arrow along the rib 15A indicates a traveling direction of the stock solution.

The separation boundary surface (IF) of the water sealing unit 22 is located around the skirt portion 151, and turbulent flow portions 27 are formed at portions where the stock solution advances toward the water sealing unit 22 and reaches the water sealing unit 22.

In the illustrated example, an example is shown in which the turbulent flow portions 27 are formed in the vicinity of tips of the ribs 15A.

Since the guide cylinder 15 is provided inside the rotating body, a centrifugal force acts on the guide cylinder 15, and the centrifugal force can be applied to the stock solution passing between the valve cylinder 14 and the skirt portion 151. Here, the presence of the rib 15A causes an action of efficiently drawing in the stock solution, and a pressing force enhanced by being added to the centrifugal force acts on the stock solution to push out the stock solution. A force of pushing out the stock solution is applied by a force applied by the presence of the ribs 15A in addition to the force applied by the centrifugal force.

The pushed-out stock solution comes into contact with the sealing water of the water sealing unit 22 positioned outside the rotating body. That is, the stock solution is applied by the rib 15A to the centrifugal force in a direction toward the outer peripheral portion 151A of the skirt portion 151 and the pushing force is increased, and the stock solution to which the pressing force is applied comes into contact with the sealing water present around the skirt portion 151. The stock solution on which the pushing force acts at the time of contact has an action of pushing in the sealing water.

However, since the centrifugal force acts even when the action acts, a restoring force is generated in the sealing water, and the restoring force (repulsive force) from the sealing water acts on the pushed stock solution.

Since the pushing action against the sealing water by the stock solution and the pushing-back action by the repulsive force against the stock solution of the sealing water by the centrifugal force are collision of complicated flows in multiple directions rather than in one direction, a turbulent flow occurs in a lower portion of the rotating body.

Here, the turbulent flow means that a linear separation boundary surface formed between liquids having different specific gravity differences is disturbed and becomes non-linear by centrifugation.

Due to the formation of such a turbulent flow, the water-soluble substance and component in the stock solution such as ammonia or alkali metals such as sodium or potassium is transferred from the oil to be treated (stock solution) to the sealing water side.

Therefore, the above mechanism is generated by the ribs 15A provided on the skirt portion 151, the water-soluble substance and component is efficiently separated from the stock solution, and the clean oil from which the water-soluble substance and component is separated can be continuously or intermittently discharged from the rotating body.

In the example of FIG. 7, an example in which no cutout portion 151B is provided is shown, but the cutout portion 151B may be provided. In this case, the reduction of the centrifugal force applied to the stock solution can be prevented by the rib 15A of the guide cylinder 15, and the stock solution can be brought into contact with the separation boundary surface of the sealing water. As a result, a force of peeling off an oil film covering the water-soluble substance and component can be increased, and the water-soluble substance and component can be easily transferred to the sealing water side.

Regarding ammonia, since ammonia is mixed into the lubricating oil when ammonia is burned in an engine such as an engine, the lubricating oil mixed with ammonia is sent to a centrifuge which is an oil purifier, and the mixed ammonia can be transferred to the sealing water side of the oil purifier by the above-described mechanism and separated.

Here, the behavior of ammonia in the oil will be described.

When ammonia is mixed in the lubricating oil, ammonia is unlikely to escape from the oil in a state where there is no stress such as heating/pressure/impacting/pressure reduction. It is expected that the reason is that ammonia is covered with the oil film and it is difficult for ammonia to escape.

As described above, in the rotating body structure including the ribs 15A of the guide cylinder 15 of the oil purifier and an operation method using the sealing water, the transition of ammonia to the sealing water does not proceed in a state where there is no turbulent flow stirring of the lubricating oil and the sealing water, and even in the case where the transition of ammonia is small, ammonia remains in the oil, and the purpose of centrifugal separation cannot be achieved.

In other words, in the present disclosure, since the plurality of ribs 15A are provided on the skirt portion 151 at the lower portion of the guide cylinder 15, the portions of the plurality of ribs 15A exert a centrifugal force on the stock solution to push out the stock solution into the rotating body.

The pushed-out stock solution comes into contact with the sealing water positioned outside the inside of the rotating body. The stock solution on which the pushing force acts at the time of contact generates an action of pushing in the sealing water, and then a force of restoring the sealing water is generated by the centrifugal force. Since the pushing action against the sealing water by the stock solution and the pushing-back action by the repulsive force against the stock solution of the sealing water by the centrifugal force are collision of complicated flows in multiple directions rather than in one direction, a turbulent flow occurs in the lower portion of the rotating body. Since the oil film covering ammonia can be peeled off by the generation of the turbulent flow, ammonia can be transferred to the sealing water side and ammonia can be separated from the oil.

In the present embodiment, the oil to be treated containing alkali metals such as sodium (Na) or potassium (K) as a water-soluble substance and component can be similarly separated and removed.

For example, in a gas turbine engine used in a marine structure or the like, sodium or potassium, which is an alkali metal, may be mixed depending on an installation state of a tank for accommodating fuel oil (corresponding to MGO/light oil), or may be mixed during transportation of fuel oil (corresponding to MGO/light oil).

The mixed alkali metals such as sodium or potassium may cause corrosion due to vanadium attack during operation of the gas turbine engine.

The alkali metals such as sodium or potassium mixed as a pretreatment of the fuel oil can be transferred to the sealing water side of the oil purifier and separated by the turbulent flow stirring mechanism. Since the gas turbine engine of the marine structure is expensive, it is a preferable aspect.

As described above, by performing the method for separating a water-soluble substance and component using the vertical centrifuge and the vertical centrifuge according to the present disclosure, the water-soluble substance and component in the stock solution can be removed from the clean oil (light liquid side) and transferred to the sealing water side, and clean oil from which the water-soluble substance and component has been removed can be discharged.

## Claims

1. A vertical centrifuge for introducing a stock solution, which is a liquid to be treated, into a processing chamber provided with a plurality of separation plates on an outer periphery of a guide cylinder to obtain a clean liquid on a light liquid side, the vertical centrifuge comprising:
a plurality of ribs provided on a lower portion of the guide cylinder and extending radially to an outer peripheral portion of an inner surface of a skirt portion expanding in a conical shape, wherein
the ribs apply a centrifugal force to the stock solution to enhance a pushing force when the stock solution is positioned in a direction toward a circumferential end of a lower portion of the skirt portion,
the stock solution pushes sealing water present around the skirt portion by the pushing force enhanced by the ribs,
a restoring force toward a push-back direction is generated in the pushed sealing water by the centrifugal force,
the pushing force of the stock solution and the restoring force generated in the sealing water collide with each other to form a turbulent flow on a boundary surface between the stock solution and the sealing water, and
the ribs are detachably provided on the inner surface of the skirt portion.

2. The vertical centrifuge according to claim 1, wherein
a water-soluble substance and component is extracted from the liquid to be treated and transferred to a sealing water side due to the formation of the turbulent flow.

3. The vertical centrifuge according to claim 2, wherein
the water-soluble substance and component contains ammonia.

4. The vertical centrifuge according to claim 2, wherein
the water-soluble substance and component contains alkali metals.

5. The vertical centrifuge according to claim 1, wherein
the rib extends to the inside of the guide cylinder.

6. The vertical centrifuge according to claim 1, wherein
a plurality of semicircular cutout portions are formed at predetermined intervals on an outer periphery of the skirt portion.
